# EUROPÄISCHE PATENTANMELDUNG

(11) **EP 2 458 297 A1**
(43) Veröffentlichungstag der Anmeldung: **30.05.2012**
(21) Anmeldenummer: 11172886.1
(22) Anmeldetag: 06.07.2011
(51) Int. Cl.: F24F 13/02, B32B 17/00, F16L 9/17

(54) **Fluidleitungssystem**

(30) Priorität: 30.11.2010 EP 10193151; 13.01.2011 EP 11150855
(71) Anmelder: Centrotherm Systemtechnik GmbH, 59929 Brilon (DE)
(72) Erfinder: Liese, Ralf, 59909 Bestwig- OT Ostwig (DE)
(74) Vertreter: Zenz

(57) **Zusammenfassung**

Bei einem Fluidleitungssystem mit zumindest einem eine in sich geschlossene Mantelfläche mit polygonalem Querschnitt aufweisenden Leitungsbauteil (2) und zumindest einer Querschnittsstabilisierungsvorrichtung (3), die an einem Längsabschnitt des Leitungsbauteils (2) angeordnet ist und den polygonalen Querschnitt des Leitungsbauteils (2) umgibt, wobei das Leitungsbauteil (2) eine verdichtete, wärmeisolierende sowie feuerbeständige Fasermaterialschicht (7) aufweist und auf der Innenseite (8) der Fasermaterialschicht (7) des Leitungsbauteils (2) eine fluidundurchlässige Dichtschicht (9) aufgebracht ist, und wobei die Fasermaterialschicht (7) mehrere, dem polygonalen Querschnitt entsprechende Eckenabschnitte (5) aufweist, die die Fasermaterialschicht (7) in jeweilige Seitenwandabschnitte (13) unterteilen, soll eine Lösung geschaffen werden, die auf konstruktiv einfache Weise und kostengünstig ein verbessertes Fluidleitungssystem bereitstellt. Dies wird dadurch erreicht, dass das Fluidleitungssystem ferner zumindest im Bereich eines jeweiligen Eckenabschnitts (5) der Fasermaterialschicht (7) wenigstens ein den jeweiligen Eckenabschnitt (5) in seiner polygonalen Querschnittsposition haltendes Längsstabilisierungselement (4) aufweist, das sich in Längsrichtung des Leitungsbauteils (2) erstreckt, wobei ein jeweiliges Längsstabilisierungselement (4) mit der Querschnittsstabilisierungsvorrichtung (3) in Eingriff stehen kann.

## Beschreibung

Die Erfindung richtet sich auf ein Fluidleitungssystem mit zumindest einem eine in sich geschlossene Mantelfläche mit polygonalem Querschnitt aufweisenden Leitungsbauteil und zumindest einer Querschnittsstabilisierungsvorrichtung, die an einem Längsabschnitt des Leitungsbauteils angeordnet ist und den polygonalen Querschnitt des Leitungsbauteils umgibt, wobei das Leitungsbauteil eine verdichtete, wärmeisolierende sowie feuerbeständige Fasermaterialschicht aufweist und auf der Innenseite der Fasermaterialschicht des Leitungsbauteils eine fluidundurchlässige Dichtschicht aufgebracht ist, und wobei die Fasermaterialschicht mehrere, dem polygonalen Querschnitt entsprechende Eckenabschnitte aufweist, die die Fasermaterialschicht in jeweilige Seitenwandabschnitte unterteilen.

Ein Fluidleitungssystem der eingangs genannten Art kann beispielsweise in Leitungssystemen einer Wärmerückgewinnungs-, Heizungs-, Lüftungs- oder Klimaanlage eingesetzt werden und ist zum Beispiel in der WO 2009/145698 A1 beschrieben. Dieses bekannte Fluidleitungssystem weist ein Leitungsbauteil auf, das eine Fasermaterialschicht und wenigstens eine fluidundurchlässige Dichtschicht umfasst. Als Halbzeug weist das Leitungsbauteil eine plattenförmige Gestalt auf und wird bei Montage in einem Leitungssystem zu einem Kanal mit in sich geschlossener Mantelfläche gebogen und an seinen Längskanten zusammengefügt. Zum Biegen des Leitungsbauteils sind in der Fasermaterialschicht Biegelinien vorgesehen, die Eckenabschnitte definieren und das Leitungsbauteil in Seitenwandabschnitte unterteilen. Darüber hinaus ermöglichen die Biegelinien ein Zusammenlegen des Leitungsbauteils zu dessen Transport. Damit das Leitungsbauteil ferner aufrollbar ist, weisen die Seitenwandabschnitte abwechselnd weiche und starre Bereiche auf, die sich quer zur Längsrichtung des Leitungsbauteils erstrecken. Dabei sind die verschiedenen Bereiche der Seitenwandabschnitte und die Biegelinien in die Fasermaterialschicht des Leitungsbauteils durch unterschiedlich starke Verpressung der Fasern in dieses eingeprägt. Gemäß der WO 2009/145698 A1 müssen die Fasern im Bereich der Biegelinien entweder nachbehandelt oder gebrochen werden, um überhaupt eine Biegung des Leitungsbauteils in den Eckenabschnitten zu ermöglichen. Nachteilig hierbei ist, dass aufgrund der starken Verpressung bzw. Verdichtung und infolge des Brechens der Fasern im Bereich der Eckenabschnitte die Festigkeit und Dehnfähigkeit der Fasermaterialschicht abnimmt. Insbesondere das Brechen der Fasern führt im Bereich der Eckenabschnitte zu einer ungleichmäßigen Wärmeleitung, wodurch Kältebrücken entstehen. Darüber hinaus ist aber auch keine weitere Materialverdrängung möglich, ohne die Fasern weiter zu brechen und damit zu schädigen. Beim Zusammenlegen des Leitungsbauteils entstehen ferner in den Eckenabschnitten hohe Zugspannungen, die zu einer weiteren Verdichtung des Fasermaterials führen. Aufgrund der in diesem Bereich kurzfaserig gebrochenen Fasern liefern die Eckenabschnitte keinen Beitrag mehr zur mechanischen Stabilität des eine in sich geschlossene Mantelfläche aufweisenden bzw. errichteten Leitungsbauteils, so dass insgesamt die Stabilität bzw. Eigenstabilität des Leitungsbauteils hinsichtlich seiner Querschnittsform und selbsttragenden Eigenschaften abnimmt. Infolge dieser mechanischen Instabilität kann der von dem Leitungsbauteil gebildete Fluidleitungskanal bereits bei geringen Unterdrücken in sich zusammenfallen bzw. kollabieren, was insbesondere daran liegt, dass die Eckenabschnitte nicht zur Formstabilität des Leitungsbauteils beitragen. Zwar kann die Formstabilität eines solchen Leitungsbauteils mit Hilfe von Querschnittsstabilisierungsvorrichtungen, die einen dem Leitungsbauteil entsprechenden Querschnitt aufweisen und in Längsrichtung des Kanals beabstandet voneinander umfangsmäßig um den Kanalquerschnitt herum angeordnet sind, erhöht werden. Solche Querschnittsstabilisierungsvorrichtungen dienen darüber hinaus der Befestigung des Leitungsbauteils beispielsweise an einer Decke. Das Leitungsbauteil kann aber auf der freitragenden Länge zwischen zwei Querschnittsstabilisierungsvorrichtungen montagebedingt infolge der geringen Formstabilität zwischen zwei Querschnittsstabilisierungsvorrichtungen immer wieder einknicken. Insbesondere sind hierbei Betriebszustände negativ zuträglich, bei denen Unterdrücke im Leitungsbauteil auftreten. Ein Knicken bzw. Einknicken des Leitungsbauteils kann zu einem Faserbruch und zu einer Beschädigung der Fasern führen, was dann im Unterdruckbereich das Kollabieren des Leitungsbauteils an solchen Punkten nach sich zieht. Insgesamt stellt das bekannte Fluidleitungssystem ein instabiles und gegenüber Unterdrücken in sich zusammenfallendes Leitungssystem dar.

Der Erfindung liegt die Aufgabe zugrunde eine Lösung zu schaffen, die auf konstruktiv einfache Weise und kostengünstig ein verbessertes Fluidleitungssystem bereitstellt und die darüber hinaus die bei dem bekannten Stand der Technik vorhandenen Probleme löst.

Bei einem Fluidleitungssystem der Eingangs bezeichneten Art wird diese Aufgabe erfindungsgemäß dadurch gelöst, dass das Fluidleitungssystem ferner zumindest im Bereich eines jeweiligen Eckenabschnitts der Fasermaterialschicht wenigstens ein den jeweiligen Eckenabschnitt in seiner polygonalen Querschnittsposition haltendes Längsstabilisierungselement aufweist, das sich in Längsrichtung des Leitungsbauteils erstreckt, wobei ein jeweiliges Längsstabilisierungselement mit der Querschnittsstabilisierungsvorrichtung in Eingriff steht bzw. stehen kann.

Vorteilhafte und zweckmäßige Ausgestaltungen und Weiterbildungen der Erfindung ergeben sich aus den Unteransprüchen.

Durch die Erfindung wird eine Möglichkeit bereitgestellt, mit welcher auf konstruktiv einfache Weise ein verbessertes Fluidleitungssystem zur Verfügung steht. Dabei ist es vorteilhaft, wenn die Fasermaterialschicht des Leitungsbauteils aus einer gepressten Mineralwolle, vorzugsweise Glaswolle oder Steinwolle, gebildet ist. Ein aus einem solchen Material bestehendes Leitungsbauteil ist bis über 100°C temperaturbeständig und im Wesentlichen feuerbeständig. Als alternatives Material zu anorganischer Mineralwolle kann auch ein flammhemmend organisches Fasermaterial für die Fasermaterialschicht des Leitungsbauteils verwendet werden. Durch die in der Schicht aus gepresstem bzw. verpresstem Fasermaterial gebildeten Hohlräume weist das Leitungsbauteil zudem ein besonders gutes Wärmedämmvermögen auf. Dadurch kommen die vorteilhaften Eigenschaften dieses Materials für die Anwendung als Fluidleitungssystem wie beispielsweise zur Gebäudebelüftung und -klimatisierung voll zur Geltung. Durch die gute Wärmedämmung wird die temperierte Luft in dem Leitungsbauteil weder in unerwünschter Weise erwärmt noch abgekühlt. Darüber hinaus gewährleistet das aus Mineralwolle oder organischem Fasermaterial bestehende Leitungsbauteil, dass das Fluidleitungssystem insgesamt den Brandschutzbestimmungen genügt. Ein weiterer Vorteil dieses Materials ist, dass es gute schalldämmende Eigenschaften aufweist, so dass keine weiteren Maßnahmen zur Schalldämmung bei der Installation in Gebäuden erforderlich sind. Die erfindungsgemäß vorgesehene, zumindest eine Querschnittsstabilisierungsvorrichtung sorgt an einem bestimmten Längsabschnitt des Leitungsbauteils, jedoch nicht über die gesamte Länge, für die mechanische Stabilität hinsichtlich der Querschnittsform des Leitungsbauteils. Um die Formstabilität des Leitungsbauteils über die gesamte Länge sicherzustellen, sieht die Erfindung vor, dass zumindest in den Eckenabschnitten der Fasermaterialschicht Längsstabilisierungselemente außenseitig an dem Leitungsbauteil befestigt sind. Die Längsstabilisierungselemente sind dabei zwischen dem Leitungsbauteil und einer Querschnittsstabilisierungsvorrichtung angeordnet, wobei die Längsstabilisierungselemente mit der Querschnittsstabilisierungsvorrichtung in Eingriff stehen. Beispielsweise können die Längsstabilisierungselemente durch Laschen oder Ösen, die im Bereich der Eckenabschnitte vorgesehen sein können, geführt und an diesen befestigt sein. Aufgrund einer formschlüssigen Verbindung zwischen den um den Außenumfang des Leitungsbauteils angeordneten Längsstabilisierungselementen und der formstabilen Querschnittsstabilisierungsvorrichtung werden die Längsstabilisierungselemente um den Umfang des Leitungsbauteils herum gleichmäßig auf Abstand gehalten und fördern somit die Formstabilität des Leitungsbauteils.

Die Erfindung sieht in Ausgestaltung vor, dass das jeweilige Längsstabilisierungselement außenseitig an dem Leitungsbauteil angebracht oder in die Fasermaterialschicht des Leitungsbauteils eingebettet ist. Im letzteren Fall kann das jeweilige Leitungsbauteil vollständig oder zumindest abschnittsweise in die Fasermaterialschicht eingebettet sein. Hinsichtlich der zweiten Option kann die Fasermaterialschicht entsprechend ausgebildete Hohlräume aufweisen, durch die die jeweiligen Längsstabilisierungselemente hindurchgeführt sind. Dies hat den herstellungstechnischen Vorteil, dass keine zusätzlichen Bauteile zur Befestigung der Längsstabilisierungselemente vorgesehen sein müssen. Vielmehr können beispielsweise solche als Aufnahme dienenden Hohlräume bei Herstellung der Fasermaterialschicht berücksichtigt und ausgebildet werden.

In Ausgestaltung der Erfindung ist ferner vorgesehen, dass die Querschnittsstabilisierungsvorrichtung mehrere, mit der Anzahl von Seitenwandabschnitten übereinstimmende Querschnittsstabilisierungselemente umfasst, deren jeweilige Längserstreckung im Wesentlichen der Breite eines jeweiligen Seitenwandabschnitts entspricht und die an ihren beiden Längsenden jeweils zumindest ein mit einem entsprechenden Längsstabilisierungselement in Eingriff bringbares Rastmittel aufweisen. Die Querschnittsstabilisierungsvorrichtung setzt sich somit aus mehreren Querschnittsstabilisierungselementen zusammen. Dadurch ist ein einfacher Transport möglich, indem die Querschnittsstabilisierungsvorrichtung zerlegt wird und am Montageort durch Zusammenfügen der einzelnen Querschnittsstabilisierungselementen wieder errichtet oder erstmalig errichtet wird. Ferner kann das Rastmittel nach Art einer Schelle ausgebildet sein, in die das Längsstabilisierungselement eingebracht oder eingedrückt werden kann. Dadurch ist eine einfache Montage der Längsstabilisierungselemente an der Querschnittsstabilisierungsvorrichtung möglich.

Eine besonders einfache Möglichkeit zur Vereinfachung der Montage der mehrere Querschnittsstabilisierungselemente umfassenden Querschnittsstabilisierungsvorrichtung ist in weiterer Ausgestaltung der Erfindung dadurch gegeben, dass bei einem jeweiligen Querschnittsstabilisierungselement das erste Längsende zumindest einen hakenförmig ausgebildeten Verbindungsansatz und das zweite Längsende zumindest eine Aufnahmeöffnung aufweist, die zur Bildung eines geschlossenen Umfangsprofils der Querschnittsstabilisierungsvorrichtung mit einem entsprechenden Verbindungsansatz eines benachbarten Querschnittsstabilisierungselements in Eingriff steht.

Das Leitungsbauteil weist als Halbzeug eine plattenförmige Gestalt auf und muss zur Ausbildung eines Fluidkanals mit einer in sich geschlossenen Mantelfläche in die polygonale Querschnittsform gebogen werden. Um die Biegung des Fluidkanals zu vereinfachen sieht die Erfindung in Ausgestaltung vor, dass vor Herstellung einer in sich geschlossenen Mantelfläche das Leitungsbauteil plattenförmig ausgebildet ist und die Innenseite der Fasermaterialschicht mehrere Längsauskehlungen aufweist, wobei die Fasermaterialschicht auf ihrer Außenseite zu den jeweiligen Längsauskehlungen korrespondierend angeordnete und nach außen ballig ausgebildete Längswölbungen aufweist, die Teil der jeweiligen Eckenabschnitte sind. Aufgrund der balligen Ausgestaltung der Eckenabschnitte weist die Fasermaterialschicht in diesen Bereichen im Vergleich zu den Seitenwandabschnitten eine geringere Verdichtung auf und ist dadurch im Wesentlichen elastisch ausgebildet. Diese elastische Ausgestaltung der Eckenabschnitte bewirkt, dass sowohl beim Zusammenlegen des Leitungsbauteils als auch zur Herstellung eines Fluidleitungskanals mit einer in sich geschlossenen Mantelfläche die Fasern in den Eckenabschnitten nicht gebrochen, sondern lediglich gedehnt werden, so dass das Fasermaterial beim Zusammenlegen des Leitungsbauteils nicht beschädigt wird. Ferner liegen nach Herstellung der in sich geschlossenen Mantelfläche Abschnitte der Innenwand der innenseitig ausgebildeten Längsauskehlungen aneinander an, was wesentlich zur Erhöhung der mechanischen Stabilität des errichteten bzw. eine in sich geschlossene Mantelfläche aufweisenden Leitungsbauteils beiträgt, so dass dieses im Wesentlichen selbsttragend ist.

Zur besseren Anordnung der Längsstabilisierungselemente sieht die Erfindung in Weiterbildung vor, dass eine jeweilige Längswölbung in ihrem Scheitel wenigstens eine ein jeweiliges Längsstabilisierungselement aufnehmende Außenlängskehlung aufweist.

In Ausgestaltung der Erfindung ist ferner vorgesehen, dass die Breite einer jeweiligen Längsauskehlung kleiner ist als die Breite einer jeweiligen, nach außen ballig ausgebildeten Längswölbung. Somit nehmen die Eckenabschnitte eine Art mondsichelförmige Ausgestaltung an, was einen sehr weichen und gering verdichteten bzw. verpressten Verlauf des Fasermaterials in den Eckenabschnitten ermöglicht. Dadurch sind starke Verformungen der Eckenabschnitte, beispielsweise bei Biegung des Leitungsbauteils, ohne eine Schädigung des Fasermaterials möglich.

Die Form der Längswölbungen und Längsauskehlungen ist beliebig, wobei es sich als vorteilhaft erwiesen hat, wenn die Längsauskehlungen und die ballig ausgebildeten Längswölbungen jeweils im Querschnitt ellipsenförmig oder kreisbogenförmig ausgebildet sind. Die Querschnitte der Längswölbungen und der Längsauskehlungen können hierbei in ihrer Grundform identisch oder voneinander abweichend sein.

Um die elastischen Eigenschaften der Eckenabschnitte zu gewährleisten und eine Verdichtung des Fasermaterials bei Biegung zu vermeiden ist es dann von Vorteil, wenn der Radius einer im Querschnitt ellipsenförmig oder kreisbogenförmig ausgebildeten Längswölbung größer ist als der Radius einer im Querschnitt ellipsenförmig oder kreisbogenförmig ausgebildeten Längsauskehlung. Auch ist es in diesem Zusammenhang vorteilhaft, wenn der Radius einer um Querschnitte ellipsenförmig oder kreisbogenförmig ausgebildeten Längswölbung größer ist als die Breite eines Seitenwandabschnitts.

Um in strömungstechnischer Hinsicht Verluste oder Verwirbelungen der Strömung in den Randzonen des von dem Leitungsbauteil gebildeten Kanals möglichst gering zu halten oder sogar zu vermeiden, ist in weiterer Ausgestaltung der Erfindung vorgesehen, dass nach Herstellung einer geschlossenen Mantelfläche des Leitungsbauteils die Innenwand einer jeweiligen Längsauskehlung flächig an sich selbst anliegt und ein Teil der fluidundurchlässigen Dichtschicht zwischen der an sich selbst anliegenden Innenwand angeordnet und eingeklemmt ist. Auf diese Weise wird eine definierte Innenkante des gebildeten Fluidleitungskanals bei geschlossener Mantelfläche erzielt.

Darüber hinaus wird vermieden, dass bei Biegung des Leitungsbauteils überschüssiges Material der fluidundurchlässigen Dichtschicht, was zusätzlich zu Strömungsverlusten beitragen könnte, innen im hergestellten Fluidleitungskanal angeordnet ist.

Zusätzlich ist es im Hinblick auf eine faserschonende Biegung der Eckenabschnitte auch von Vorteil, wenn die Fasern der Schicht aus Fasermaterial in den Eckenabschnitten gleich stark oder geringer stark verdichtet bzw. verpresst sind als in den Seitenwandabschnitten.

Um die selbsttragenden Eigenschaften des Leitungsbauteils weiter zu erhöhen, ist in weiterer Ausgestaltung der Erfindung vorgesehen, dass zumindest Bereiche der Seitenwandabschnitte durch starke Verdichtung bzw. Verpressung der Fasern der Fasermaterialschicht formstabil ausgebildet sind.

Die Erfindung sieht in weiterer Ausgestaltung vor, dass eine Schicht aus einem elastischen Vliesmaterial vorgesehen ist, die an der Außenseite des Leitungsbauteils auf der

Fasermaterialschicht aufgebracht ist. Das außenseitig angebrachte Vliesmaterial ermöglicht je nach Dehnfähigkeit eine Rückstellung bzw. Formstabilität des in Form eines im Querschnitt polygonalen Fluidleitungskanals gebogenen Leitungsbauteils. Das außenseitig angebrachte Vliesmaterial kann optional eine wasserdampfdiffusionsdichte Folienschicht, beispielsweise aus einem thermoplastischen Kunststoff aufweisen, wobei ferner das Vliesmaterial bzw. die Folienschicht mit Hilfe von beispielsweise Glas-, Keramik- oder Kunststofffasern verstärkt sein kann.

Um ferner ein Aufrollen des Leitungsbauteils in dessen Längsrichtung zu gewährleisten, ist es schließlich von Vorteil, wenn zumindest ein Seitenwandabschnitt der Fasermaterialschicht außenseitig querverlaufende, ballig ausgebildete und nach außen gewölbte Biegeabschnitte mit geringer Materialverdichtung aufweist. Die ballig ausgebildeten Biegeabschnitte ähneln hierbei vom Prinzip und in ihrer Funktion her den ballig ausgebildeten Eckenabschnitten, wobei zweckmäßigerweise alle Seitenwandabschnitte ballig ausgebildete Biegeabschnitte aufweisen können.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der exemplarische Ausführungsbeispiele der Erfindung dargestellt sind. In der Zeichnung zeigt:
Figur 1 ein erfindungsgemäßes Fluidleitungssystem in seitlicher Perspektivansicht,
Figur 2 in perspektivischer Ansicht mehrere Längsstabilisierungselemente, die an einer Querschnittsstabilisierungsvorrichtung angebracht sind,
Figur 3 eine vergrößerte Ansicht des Fluidleitungssystems aus Figur 1,
Figur 4 ein Leitungsbauteil des Fluidleitungssystems in Querschnittsansicht,
Figur 5 einen Ausschnitt des in Figur 4 dargestellten Leitungsbauteils als Halbzeug,
Figur 6 einen vergrößerten Ausschnitt eines Seitenwandabschnitts des in Figur 4 dargestellten Leitungsbauteils,
Figur 7 ein Querschnittsstabilisierungselement in perspektivischer Ansicht,
Figur 8 die Querschnittsstabilisierungsvorrichtung in perspektivischer Ansicht,
Figur 9 einen in Figur 5 gezeigten Ausschnitt B des Leitungsbauteils,
Figur 10 den in Figur 5 gezeigten Ausschnitt B des Leitungsbauteils in einem ersten Schritt zur Herstellung einer in sich geschlossenen Mantelfläche,
Figur 11 den in Figur 5 gezeigten Ausschnitt B des Leitungsbauteils in einem zweiten Schritt zur Herstellung einer in sich geschlossenen Mantelfläche,
Figur 12 einen in Figur 4 gezeigten Ausschnitt C des Leitungsbauteils nach Herstellung einer in sich geschlossenen Mantelfläche,
Figur 13 eine Querschnittsansicht des in Figur 1 dargestellten Fluidleitungssystems,
Figur 14 eine Querschnittsansicht eines Fluidleitungssystems mit sechseckigem Strömungsquerschnitt und
Figur 15 zwei Querschnittsstabilisierungselemente der in Figur 14 dargestellten Querschnittsstabilisierungsvorrichtung.

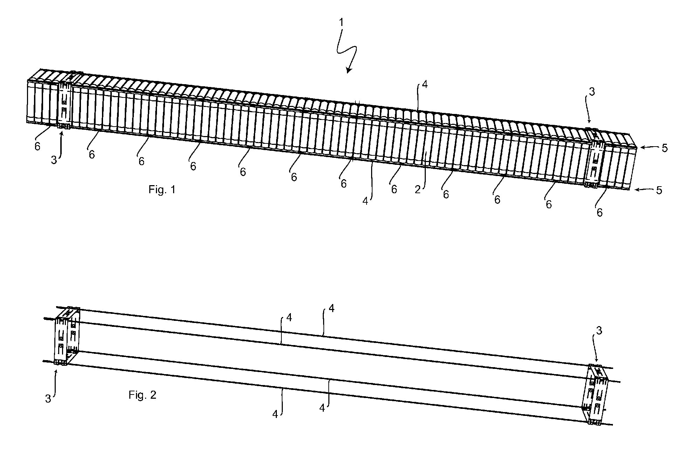

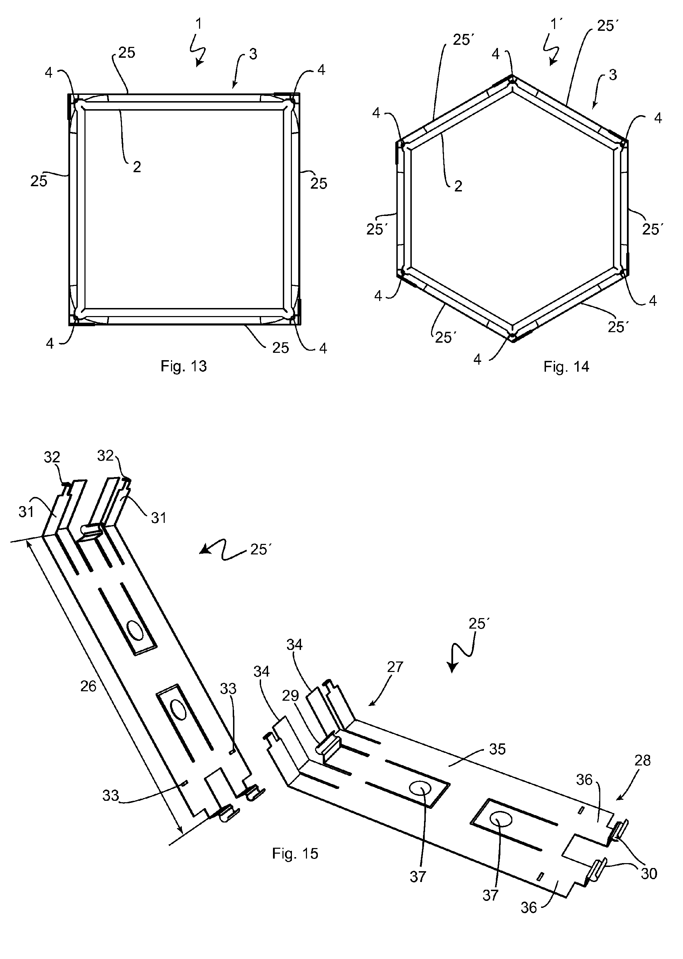

Nachstehend wird das erfindungsgemäße Fluidleitungssystem mit Bezug auf die Figuren 1 bis 15 beschrieben, wobei in den Figuren 1 bis 13 ein Fluidleitungssystem 1 gemäß eines ersten Ausführungsbeispiels mit viereckigem Strömungsquerschnitt und in den Figuren 14 bis 17 ein Fluidleitungssystem 1' gemäß einer zweiten Ausführungsform mit sechseckigem Strömungsquerschnitt dargestellt ist. Der Ausdruck "Fluid" bezieht sich hierbei sowohl auf ein gasförmiges als auch auf ein dampfförmiges Medium, welches durch das Fluidleitungssystem 1 bzw. 1' geleitet werden soll.

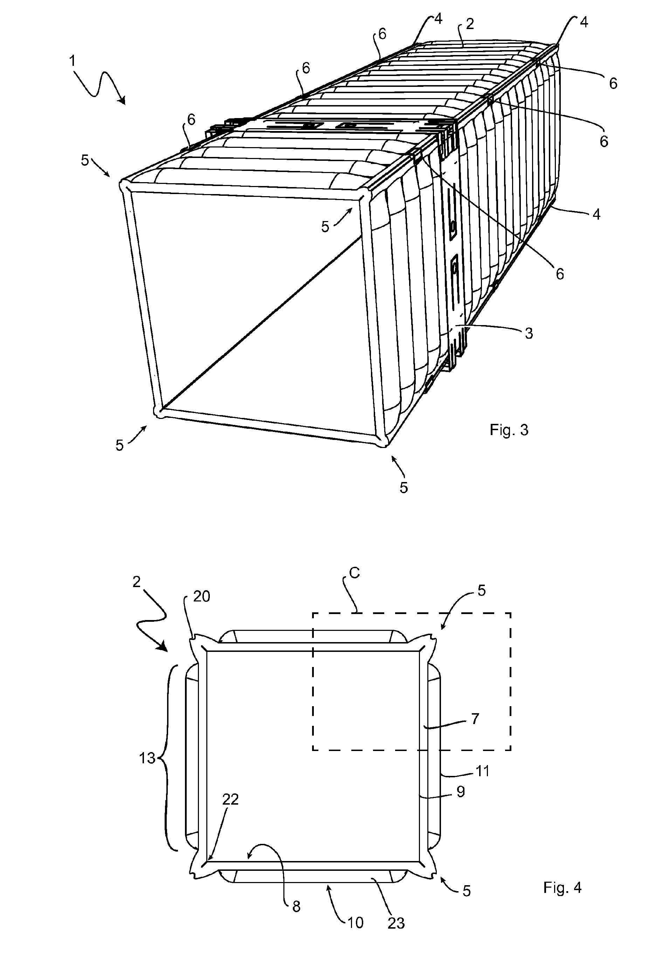

Das in Figur 1 in perspektivischer Ansicht dargestellte Fluidleitungssystem 1 mit viereckigem Strömungsquerschnitt umfasst zumindest ein Leitungsbauteil 2, das eine in sich geschlossene Mantelfläche mit viereckigen bzw. polygonalen Querschnitt aufweist. Es versteht sich von selbst, dass ein Leitungssystem aus einer Vielzahl von Leitungsbauteilen 2 gebildet werden kann, wobei auch ein Leitungsbauteil 2 für das erfindungsgemäße System ausreichen kann. Das Leitungsbauteil 2 kann eine ausreichende Eigenstabilität aufweisen, so dass es für eine gewisse Leitungslänge selbsttragend ist. Zur Erhöhung der mechanischen Stabilität des Leitungsbauteils 2 sind zwei Querschnittsstabilisierungsvorrichtungen 3 vorgesehen, die im Bereich der Längsenden des Leitungsbauteils 2 und um den Außenumfang des Leitungsbauteils 2 herum angeordnet sind und den polygonalen Querschnitt des Leitungsbauteils 2 umgeben. Es sei angemerkt, dass die Querschnittsstabilisierungsvorrichtungen 3 nicht nur der Stabilisierung der Querschnittsform des Leitungsbauteils 2 dienen, sondern auch die Funktion des Abhängens des gesamten Leitungsbauteils 2 an beispielsweise einer Decke übernehmen können. Das Fluidleitungssystem 1 umfasst ferner eine Vielzahl von Längsstabilisierungselementen 4. Dabei ist in dem dargestellten Ausführungsbeispiel jedem Eckenabschnitt 5 des Leitungsbauteils 2 ein Längsstabilisierungselement 4 zugeordnet. Jedes in den entsprechenden Eckenabschnitten 5 des Leitungsbauteils 2 angeordnete Längsstabilisierungselement 4 ist dabei durch Laschen bzw. Ösen 6 geführt, die in Längsrichtung an den Eckenabschnitten 5 des Leitungsbauteils 2 angebracht sind, wie insbesondere der vergrößerten Ansicht in Figur 3 zu entnehmen ist, bei der nur eine Querschnittsstabilisierungsvorrichtung 3 gezeigt ist. In Figur 1 sind lediglich die Laschen bzw. Ösen 6 für einen Eckenabschnitt 5 des Leitungsbauteils 2 mit Bezugszeichen versehen, wobei die Ösen 6 entlang der Längsachse des Leitungsbauteils 2 an allen vier Eckenabschnitten 5 angebracht sind. Darüber hinaus sind die Längsstabilisierungselemente 4 mit den Querschnittsstabilisierungsvorrichtungen 3 verbunden. Aus Gründen einer besseren Übersicht sind in Figur 2 die beiden Querschnittsstabilisierungsvorrichtungen 3 und die vier Längsstabilisierungselemente 4 ohne das Leitungsbauteil 2 und die an dem Leitungsbauteil 2 angebrachten Laschen bzw. Ösen 6 dargestellt. Die vier Längsstabilisierungselemente 4 sind stabförmig ausgebildet und erstrecken sich in jedem der Eckenabschnitte 5 entlang der Längsachse des Leitungsbauteils 2, wobei die Längsstabilisierungselemente 4 als Hohl- oder Vollprofil ausgebildet sein können. In dem dargestellten Ausführungsbeispiel weisen die Längsstabilisierungselemente 4 jeweils eine vollrunde Querschnittsform auf, wobei jede Querschnittsform denkbar ist, wie beispielsweise eine V-förmige Querschnittsform. Nachstehend folgt eine detaillierte Beschreibung der einzelnen Bauteile des Fluidleitungssystems 1.

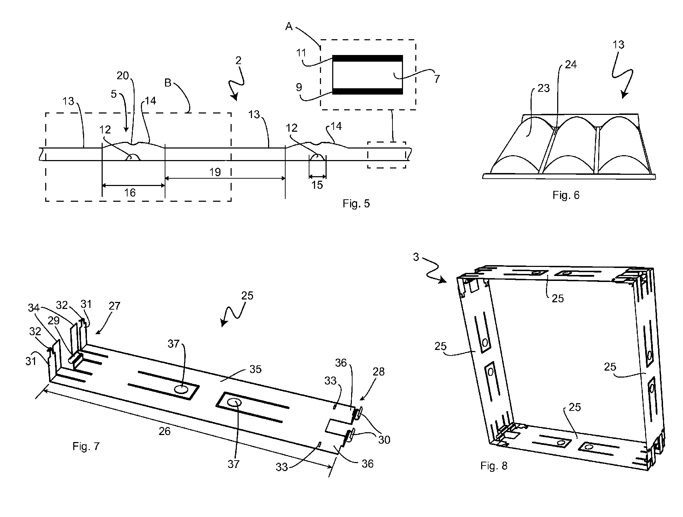

In Figur 4 ist das Leitungsbauteil 2 im Querschnitt dargestellt. Das Leitungsbauteil 2 weist als Halbzeug vor Herstellung einer in sich geschlossenen Mantelfläche eine plattenförmige Gestalt auf und muss im Rahmen der Montage erst in die polygonale Querschnittsform gebogen werden, so wie es die Figur 4 zeigt. Nach Herstellung der in sich geschlossenen Mantelfläche weist das Leitungsbauteil 2 in der dargestellten Ausführungsform einen viereckigen Querschnitt auf. Es sei angemerkt, dass die dargestellte viereckige Querschnittsform rein exemplarisch zu verstehen ist und jede polygonale Querschnittsform denkbar und von der Erfindung umfasst ist. In Figur 5 ist ein Ausschnitt des als Halbzeug vorliegenden Leitungsbauteils 2 dargestellt, welches eine plattenförmige Gestalt aufweist. Das Leitungsbauteil 2 ist schichtartig aufgebaut, wie dem vergrößerten Ausschnitt A in Figur 5 zu entnehmen ist, und umfasst eine mittlere Fasermaterialschicht 7, die verdichtet, wärmeisolierend sowie feuerbeständig ausgebildet ist. Die Fasermaterialschicht 7 ist aus verdichteter Mineralwolle, wie beispielsweise Glaswolle oder Steinwolle, gebildet und weist wärmeisolierende sowie feuerbeständige Eigenschaften auf. Alternativ zu anorganischer Mineralwolle kann auch ein organisches Fasermaterial oder organisches Halbzeug für die Fasermaterialschicht 7 verwendet werden. Für die Erfindung wird ausgenutzt, dass aus diesem im Rohzustand mechanisch instabilen Fasermaterial durch Verpressen formstabile, eigensteife Formteile erzeugt werden können. Auf der die Innenseite 8 des Leitungsbauteils 2 darstellenden Seitenfläche ist auf der Fasermaterialschicht 2 eine fluidundurchlässige Dichtschicht 9 aufgebracht, die aus einem thermoplastischen Kunststoff, wie beispielsweise PET, bestehen kann. Auf der die Außenseite 10 des Leitungsteils 2 darstellenden Seitenfläche ist auf der Fasermaterialschicht 7 eine Schicht bzw. Außenschicht 11 aus einem Vliesmaterial aufgebracht. Die Außenschicht 11 aus Vliesmaterial ist rein optional und somit entbehrlich. Allerdings kann das Vorsehen dieser Außenschicht 11 je nach Dehnfähigkeit des Vliesmaterials gewisse Vorteile hinsichtlich einer Rückstellwirkung und Stabilität des Leistungsbauteils 1 bewirken. Alternativ kann die Außenschicht 6 auch aus einem wasserdampfdiffusionsdichten Material gebildet sein. In dem dargestellten Ausführungsbeispiel sind die Längsstabilisierungselemente 4 außenseitig an dem Leitungsbauteil 2 angebracht und zu diesem Zweck durch Laschen bzw. Ösen 6 geführt. Alternativ ist es denkbar, dass ein jeweiliges Längsstabilisierungselement 4 in die Fasermaterialschicht 7 des Leitungsbauteils 2 eingebettet ist. Zu diesem Zweck kann die Fasermaterialschicht 7 in ihren Eckenabschnitten 5 in Längsrichtung des Leitungsbauteils 2 verlaufende Hohlräume aufweisen, durch die die jeweiligen Längsstabilisierungselemente 4 hindurchgeführt sein können. Alternativ ist denkbar, die Längsstabilisierungselemente 4 in die Fasermaterialschicht 7 als festen Bestandteil nicht demontierbar einzubetten.

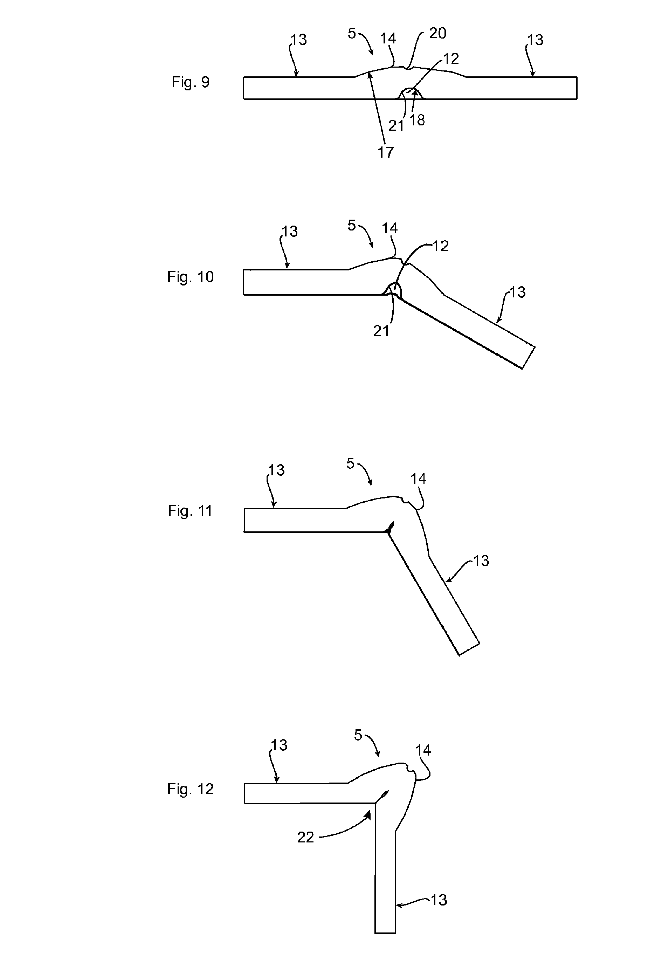

Zur Herstellung einer in sich geschlossenen Mantelfläche ist es erforderlich, dass sich das nicht-metallische Leitungsbauteil 2 leicht biegen lässt. Zu diesem Zweck weist die Fasermaterialschicht 7 mehrere voneinander beabstandete Längsauskehlungen 12 auf, die das Leitungsbauteil 2 bzw. die Fasermaterialschicht 7 in mehrere Seitenwandabschnitte 13 unterteilen. Dabei gehören die Längsauskehlungen 12 zu den einzelnen Eckenabschnitten 5 des Leitungsbauteils 2 und sind innenseitig bzw. in der Innenseite 8 der Fasermaterialschicht 7 ausgeformt. Die innenseitig angeordnete Dichtschicht 9 überdeckt die Längsauskehlungen 12, so dass zwischen der Dichtschicht 9 und einer jeweiligen Längsauskehlung 12 ein längs verlaufender Hohlraum ausgebildet ist. Ein jeweiliger Eckenabschnitt 5 umfasst ferner eine Längswölbung 15, die ballig und auf der Außenseite 10 der Fasermaterialschicht 7 ausgebildet ist. Wie insbesondere aus Figur 5 hervorgeht, ist die Breite 15 einer Längsauskehlung 12 kleiner ist als die Breite 16 einer Längswölbung 14. Ferner sind die Längsauskehlungen 12 und die Längswölbungen 14 im Wesentlichen kreisbogenförmig ausgebildet, wobei die Längswölbungen 14 ballig gerundet nach außen vorstehen. Auch ist der Radius 17 einer jeweiligen Längswölbung 14 größer als der Radius 18 einer jeweiligen Längsauskehlung 12, wie aus Figur 9 hervorgeht. Zusätzlich kann der Radius 17 der Längswölbung 14 größer als die Breite 19 (siehe Figur 5) des Seitenwandabschnitts 13 sein. Optional können - wie in dem dargestellten Ausführungsbeispiel gezeigt - die Längswölbungen in ihrem Scheitel eine Außenlängskehlung 20 zur Aufnahme eines Längsstabilisierungselements 4 aufweisen.

Aufgrund der besonderen Ausgestaltung der Eckenabschnitte 5 ist der Bereich um eine jeweilige Längsauskehlung 12 mit einer im Vergleich zu den Seitenwandabschnitten 13 dickeren Fasermaterialschicht 7 ausgebildet, wodurch die Fasern der Fasermaterialschicht 7 in den Eckenabschnitten 5 gleich stark oder weniger stark verdichtet bzw. verpresst sind als die Fasern der Fasermaterialschicht 7 in den Seitenwandabschnitten 13. Sowohl die Längsauskehlungen 12 als auch die korrespondierend gegenüberliegend zu den Längsauskehlungen 12 angeordneten und ausgebildeten Längswölbungen 14 sind in der Fasermaterialschicht 7 ausgeformt, was beispielsweise im Rahmen der Herstellung des Leitungsbauteils 2 als Halbzeug erfolgen kann.

Damit das als Halbzeug plattenförmig ausgebildete Leitungsbauteil 2 für den Transport auch zusammenrollbar ist, weist die Fasermaterialschicht 7 in den Bereichen der Seitenwandabschnitte 13 außenseitig querverlaufende, nach außen gewölbte und ballig ausgebildete Biegeabschnitte 23 auf. Mit Bezug auf Figur 6, die eine vergrößerte Ansicht eines Seitenwandabschnitts 13 zeigt, ist die Fasermaterialschicht 7 in den Bereichen der Biegeabschnitte 23 geringer stark verdichtet bzw. verpresst als in den zwischen den Biegeabschnitten 23 ausgebildeten Zwischenabschnitten 24. Aufgrund der balligen Ausbildung der Biegeabschnitte 23 weisen diese eine größere Wandstärke, jedoch eine geringere Faserverdichtung auf. Infolge der geringen Materialverdichtung im Bereich der Biegeabschnitte 23 und der sich in Längsrichtung des Leitungsbauteils 2 abwechselnden Biegeabschnitte 23 und Zwischenabschnitte 24 ist es möglich, dass das Leitungsbauteil 2 seiner Montage zum Transport in Längsrichtung aufrollbar ist. Aufgrund der geringen Materialverdichtung in den Biegeabschnitten 23 werden die Fasern der Fasermaterialschicht 7 beim Aufrollen nicht geschädigt oder gebrochen, was zu den einleitend beschriebenen Nachteilen hinsichtlich der Eigenstabilität führen würde.

Zur Herstellung einer in sich geschlossenen Mantelfläche wird das in Figur 5 noch plattenförmige Leitungsbauteil 2 im Bereich der elastisch ausgebildeten Eckenabschnitte 5 gebogen. Die Figur 9 zeigt exemplarisch einen aus Figur 5 ersichtlichen Ausschnitt B für einen Eckenabschnitt 5 und angrenzende Seitenwandabschnitte 13, wohingegen die Figuren 10 bis 12 einzelne Zustände beim Biegevorgang für den Ausschnitt B zeigen. Durch Biegung und Verformung der Eckenabschnitte 5 wird die in sich geschlossene Mantelfläche des Leitungsbauteils 2 hergestellt. Ausgehend von der in Figur 9 dargestellten Form des Eckenabschnitts 5 führt die Biegung bzw. Verformung des Eckenabschnitts 5 dazu, dass einer der beiden dargestellten Seitenwandabschnitte 13 unter einem Winkel von etwa 30° zu dem anderen Seitenwandabschnitt 13 abgewinkelt angeordnet ist. In den Figuren 11 und 12 nimmt die Verformung des Eckenabschnitts 5 zu, wobei der Winkel in Figur 11 in etwa 60° beträgt, unter dem der eine Seitenwandabschnitt 13 zu dem anderen Seitenwandabschnitt 13 abgewinkelt ist. In Figur 12 ist schließlich die Endposition der beiden angrenzenden Seitenwandabschnitte 13 dargestellt. Bei dem im Querschnitt viereckigen Leitungsbauteil 2 sind in Endposition folglich die beiden Seitenwandabschnitte 13 unter einem Winkel von 90° zueinander angeordnet. Dieser Biegevorgang wird für die drei anderen Eckenabschnitte 5 durchgeführt, so dass das Leitungsbauteil 2 die in Figur 4 für den Ausschnitt C gezeigte, Gestalt aufweist und insgesamt eine viereckige Querschnittsform besitzt.

Um die Verluste in den innenseitigen Eckenbereichen des wie vorstehend zu einem Fluidleitungskanal geformten und gebogenen Leitungsbauteils 2 möglichst gering zu halten, sollte kein die Strömung beeinflussendes Material in diesem Bereich vorhanden sein. Normalerweise würde nach Herstellung der in sich geschlossenen Mantelfläche das die Längsauskehlungen 12 überdeckende Material der Dichtschicht 9 überschüssig sein. Dadurch würde ein Teil des Materials der Dichtschicht 4 im Inneren des gebildeten Fluidleitungskanals angeordnet sein und die Strömung nachteilig beeinflussen. Um dies zu vermeiden ist erfindungsgemäß vorgesehen, dass das überschüssige Material der Dichtschicht 9 beim Biege- bzw. Verformungsvorgang in die jeweiligen Hohlräume der Längsauskehlungen 12 gelangt. Wie aus den Figuren 10 und 11 ersichtlich ist, legt sich der die Längsauskehlung 12 überdeckende Teil der Dichtschicht 9 beim Biegevorgang in den Hohlraum, wobei mit Zunahme der Verformung des Eckenabschnitts 9 die Größe des Hohlraums abnimmt und sich die Querschnittsform der Längsauskehlung 12 von im Wesentlichen kreisförmig zu zunächst elliptisch ändert. Mit weiterer Zunahme der Verformung des Eckenabschnitts 9 wird der ursprünglich die Längsauskehlung 12 überdeckende Abschnitt der Dichtschicht 9 von den sich gegenüberliegenden Bereichen der Innenwand 21 der Längsauskehlung 12 eingeklemmt, wobei die Innenwand 21 im Wesentlichen flächig an sich selbst anliegt und nur durch die Dichtschicht 4 getrennt ist. Wie insbesondere aus Figur 12 hervorgeht, wird von einem Teil der an sich selbst anliegenden Innenwand 21 eine rechtwinklige Innenkante 22 (siehe auch Figur 4) definiert.

Das vorstehend beschriebene Leitungsbauteil 2 ist selbstragend ausgebildet und weist eine hinreichende Eigenstabilität auf. Um die mechanische Stabilität des eine in sich geschlossene Mantelfläche aufweisenden Leitungsbauteils 2 zu erhöhen, umfasst das erfindungsgemäße Fluidleitungssystem 1 die Querschnittsstabilisierungsvorrichtung 3 und die in den Eckenabschnitten 5 angeordneten Längsstabilisierungselemente 4. Die Querschnittsstabilisierungsvorrichtung 3 und die mehreren Längsstabilisierungselemente 4 stützen das Leitungsbauteil 2 nach Art eines Gerüsts ab und sorgen dafür, dass das Leitungsbauteil 2 seine viereckige Querschnittsform beibehält und nicht einknickt oder in sich kollabiert. Um dies zu erreichen, ist die Querschnittsstabilisierungsvorrichtung 3 formstabil bzw. starr ausgebildet und bietet eine Möglichkeit, durch die die stangenförmigen Längsstabilisierungselemente 4 das Querschnittsprofil des Leitungsbauteils 2 aufrechterhalten können. Dabei ist die Querschnittsstabilisierungsvorrichtung 3 zumindest an einem Längsabschnitt des Leitungsbauteils 2 angeordnet, wobei üblicherweise, wie in Figur 1 dargestellt ist, zwei Querschnittsstabilisierungsvorrichtungen 3 vorgesehen sind, die an den Längsenden der Längsstabilisierungselemente 4 angeordnet sind und mit diesen in Eingriff stehen. Erfindungsgemäß ist zur Erhöhung der mechanischen Stabilität vorgesehen, dass jeweils ein Längsstabilisierungselement 4 in einem Eckenabschnitt 5 angeordnet ist, weil die Eckenabschnitte 5 im Vergleich zu den Seitenwandabschnitten 13 statisch betrachtet instabile Bereiche darstellen. Daher ist es zweckmäßig, die Längsstabilisierungselemente 4 in den Eckenabschnitten 5 anzuordnen und in diesen Bereichen über die Laschen bzw. Ösen 6 mit dem Leitungsbauteil 2 zu verbinden. Dabei hält die starre Querschnittsstabilisierungsvorrichtung 3 die Längsstabilisierungselemente 4 umfänglich auf Abstand, so dass die Längsstabilisierungselemente 4 die Eckenabschnitte 5 in ihrer polygonalen, d.h. viereckigen, Querschnittsposition halten und ein Einknicken des Leitungsbauteils 2 über die gesamte Länge verhindern. Wie den vorstehenden Ausführungen zu entnehmen ist, sind die Längsstabilisierungselemente 4 jeweils außenseitig an dem Leitungsbauteil 2 demontierbar angebracht und erstrecken sich in Längsrichtung des Leitungsbauteils 2, wie in Figur 1 in Verbindung mit Figur 2 zu sehen ist.

Aus Gründen der Platzersparnis, beispielsweise zum Transport oder zur Lagerung, wird, wie den Figuren 7 und 8 zu entnehmen ist, die Querschnittsstabilisierungsvorrichtung 3 aus mehreren Querschnittsstabilisierungselementen 25 gebildet. In dem dargestellten Ausführungsbeispiel entspricht die Anzahl der Seitenwandabschnitte 13 der Anzahl der Querschnittsstabilisierungselemente 25, wobei auch eine davon abweichende Anzahl vorstellbar ist, solange die Funktionalität gegeben ist, die Längsstabilisierungselemente 4 in den Eckenabschnitten 5 des Leitungsbauteils 2 gleichmäßig um den Umfang des Leitungsbauteils 2 auf Abstand zu halten, um die Querschnittsform des Leitungsbauteils 2 über seine gesamte Länge aufrecht zu erhalten.

Mit Bezug auf die Figuren 3, 7 und 8 ist zu erkennen, dass die Querschnittsstabilisierungsvorrichtung 3 den gleichen Querschnitt wie das Leitungsbauteil 2 aufweist. Dadurch ist sichergestellt, dass die Querschnittsstabilisierungsvorrichtung 3, die um den Außenumfang des Leitungsbauteils 2 herum angeordnet ist, ein Mindestmaß an Platz in Anspruch nimmt. Um dies zu erreichen, entspricht die Längserstreckung 26 eines jeweiligen Querschnittsstabilisierungselements 25 im Wesentlichen der Breite 19 eines jeweiligen Seitenwandabschnitts 13. Zur Fixierung der Längsstabilisierungselemente 4 an den einzelnen Querschnittsstabilisierungselementen 25, die die eigentliche Querschnittsstabilisierungsvorrichtung 3 bilden, sind an den beiden Längsenden 27 und 28 eines jeden Querschnittsstabilisierungselements 25 Rastmittel 29 und 30 angeformt, die rohrschellenförmig und elastisch ausgebildet sind, so dass die stangenförmigen Längsstabilisierungselemente 4 formschlüssig in die Rastmittel 29 und 30 eingepresst und dort fixiert, aber auch wieder aus den Rastmitteln 29, 30 ausgebracht werden können. In der Darstellung weist das erste Längsende 27 ein Rastmittel 29 auf, wohingegen an dem zweiten Längsende 28 zwei Rastmittel 30 vorgesehen sind.

Wie ferner aus Figur 7 ersichtlich ist, weist das erste Längsende 27 des Querschnittsstabilisierungselements 25 mehrere hakenförmig ausgebildete, abgewinkelte Verbindungsansätze 31 auf, wobei auch ein einzelner Verbindungsansatz 31 ausreichend sein kann. Die hakenförmigen Verbindungsansätze 31 weisen Rastnasen 32 auf, die in korrespondierende Aufnahmeöffnungen 33 eines benachbarten Querschnittsstabilisierungselements 25 eingreifen. Die Aufnahmeöffnungen 33 sind im Bereich des zweiten Längsendes 28 eines jeweiligen ausgebildet Querschnittsstabilisierungselements 25. Das Querschnittsstabilisierungselement 25 weist ferner zwei abgewinkelte Klemmstege 34 auf, die an dem ersten Längsende 28 angeformt sind. Die Verbindungsansätze 31 und die Klemmstege 34 sind im Wesentlichen rechtwinklig zu einer Grundfläche 35 des Querschnittsstabilisierungselements 25 abgewinkelt, wobei die Klemmstege 34 in Richtung der Längserstreckung 26 der Grundfläche 35 leicht versetzt zu den Verbindungsansätzen 31 angeordnet sind, wobei die Klemmstege 34 weiter nach außen hin vorstehen als die Verbindungsansätze 31. Der zwischen den Klemmstegen 34 und Verbindungsansätzen 31 vorhandene minimale Versatz wird dazu genutzt, bei der Montage der einzelnen Querschnittsstabilisierungselemente 25 mehrere, am zweiten Längsende 28 angeformte Steckansätze 36 zwischen die Klemmstege 34 und die Verbindungsansätze 31 eines benachbarten Querschnittsstabilisierungselements 25 einzubringen, wobei bei Einbringung die Rastnasen 32 in die Aufnahmeöffnungen 32 gelangen und für eine zusätzliche Fixierung zwischen zwei benachbarten Querschnittsstabilisierungselementen 25 sorgen. Auf diese Weise werden die Querschnittsstabilisierungselemente 25 untereinander verbunden und bilden ein geschlossenes Umfangsprofil der Querschnittsstabilisierungsvorrichtung 3. Auf der Grundfläche 35 jedes Querschnittsstabilisierungselements 25 sind ferner Montageöffnungen 37 ausgebildet, die zur Anbringung des gebildeten Fluidleitungssystems 1 an beispielsweise einer Decke verwendet werden können.

In Figur 13 ist eine Querschnittsansicht des erfindungsgemäßen und vorstehend beschriebenen Fluidleitungssystems 1 dargestellt, wobei das Leitungsbauteil 1 und die Querschnittsstabilisierungsvorrichtung 3 ein viereckiges Querschnittsprofil aufweisen. Es versteht sich, dass die vorstehende Beschreibung nicht nur auf viereckige Querschnittsprofile beschränkt ist, sondern jedes polygonale Querschnittsprofil angesprochen ist. In Figur 14 ist exemplarisch ein abgewandeltes Fluidleitungssystem 1' dargestellt, das ein im Querschnitt sechseckiges Leitungsbauteil 2, eine entsprechend sechseckig ausgebildete Querschnittsstabilisierungsvorrichtung 3 und entsprechende sechs Längsstabilisierungselemente 4 umfasst. Die in Figur 15 verwendeten Bezugszeichen beziehen sich überwiegend auf bereits bekannte Einzelheiten eines Querschnittsstabilisierungselements 25', die für das in den Figuren 1 bis 13 dargestellte Querschnittsstabilisierungselement 25 des Fluidleitungssystems 1 detailliert beschrieben worden sind. Daher wird zur Vermeidung von Wiederholungen auf die vorstehende Beschreibung zu diesen Einzelheiten verwiesen und im Wesentlichen die Unterschiede zwischen den Fluidleitungssystemen 1 und 1' bzw. zwischen den Querschnittsstabilisierungselementen 25 und 25' erläutert.

Aufgrund der unterschiedlichen Querschnittsform unterscheiden sich beide Fluidleitungssysteme 1 und 1' in dem Querschnittsstabilisierungselement 25' und darin, dass das Leitungsbauteil 2 anstatt vier nun sechs Seitenwandabschnitte 13 aufweist. Die Unterschiede zwischen den Querschnittsstabilisierungselementen 25 und 25' sind ebenso minimal, denn sie bestehen darin, dass zur Herstellung einer sechseckigen Umfangsgestalt die an dem ersten Längsende 27 hakenförmig ausgebildeten Verbindungsansätze 31 und die Klemmstege 34 nun nicht mehr rechtwinklig, sondern unter einem Winkel von 120° zu der Grundfläche 35 abgewinkelt verlaufen. In allen weiteren Einzelheiten sind die Querschnittsstabilisierungselemente 25 und 25' identisch, so dass hinsichtlich einer detaillierteren Beschreibung auf die vorstehenden Ausführungen zu dem Querschnittsstabilisierungselement 25 verwiesen sei. Dem Fachmann erschließen sich die vorzunehmenden Änderungen auf naheliegende Weise, um von dem im Querschnitt viereckigen Fluidleitungssystem 1 zu dem im Querschnitt sechseckigen Fluidleitungssystem 1'zu gelangen. Die ausführlich für ein im Querschnitt viereckiges Fluidleitungssystem 1 vorgestellten technischen Merkmale sind ohne aufwendige Abwandlungen auf jedes beliebige polygonale Querschnittsprofil übertragbar.

Ausgangspunkt der Erfindung ist die Problematik des Abknickens eines Fluidleitungskanals während der Montage, was ein gravierendes Problem darstellt, da ein Abknicken irreversible Schäden durch Faserbruch und Reißen des Außenmaterials des Kanals bedeuten kann. Zudem kann dadurch ein Kollabieren bei Unterdruck hervorgerufen werden. Zusammenfassend ist zu dieser Problematik gemäß der Erfindung eine Stabilisierungsmaßnahme in Längsrichtung eines Fluidleitungskanals vorgestellt worden. An den Eckabschnitten 5 sind in Kanallängsrichtung Laschen oder Ösen 6 angebracht, durch die zur Stabilisierung bzw. Vermeidung des Abknickens des quasiendlos Kanals profil- bzw. stangenförmige Längsstabilisierungselemente 4 eingebracht werden können. An allen Ecken des Kanals befinden sich über die gesamte Länge die Profile 4, die durch die außen an der Kanalwand angebrachten Laschen oder Ösen 6 hindurch geführt sind. Die Profile bzw. Längsstabilisierungselemente 4 sind an den an den Querschnittsstabilisierungselementen 25 bzw. 25' ausgebildeten Rastmitteln 29 und 30 formschlüssig befestigt. Eine Vielzahl von Querschnittsstabilisierungselementen 25 bzw. 25' bildet hierbei die Querschnittsstabilisierungsvorrichtung 3, die mit den Längsstabilisierungselementen 4 in Eingriff steht und diese umfänglich auf Abstand hält. Die Querschnittsstabilisierungselemente 25 bzw. 25' bilden ein geschlossenes Umfangsprofil, welches sich im Abstand von zwei bis drei Metern wiederholt (je nach notwendiger frei tragender länge) und das als Befestigung der Abhängung dient.

Die vorstehend beschriebene Erfindung ist selbstverständlich nicht auf die beschriebenen und dargestellten Ausführungsformen beschränkt. An den in der Zeichnung dargestellten Ausführungsformen können zahlreiche, dem Fachmann entsprechend der beabsichtigten Anwendung naheliegende Abänderungen vorgenommen werden, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von dem konkreten Ausführungsbeispielen für den Fachmann naheliegt.

## Patentansprüche

1. Fluidleitungssystem mit zumindest einem eine in sich geschlossene Mantelfläche mit polygonalem Querschnitt aufweisenden Leitungsbauteil (2) und zumindest einer Querschnittsstabilisierungsvorrichtung (3), die an einem Längsabschnitt des Leitungsbauteils (2) angeordnet ist und den polygonalen Querschnitt des Leitungsbauteils (2) umgibt,
wobei das Leitungsbauteil (2) eine verdichtete, wärmeisolierende sowie feuerbeständige Fasermaterialschicht (7) aufweist und auf der Innenseite (8) der Fasermaterialschicht (7) des Leitungsbauteils (2) eine fluidundurchlässige Dichtschicht (9) aufgebracht ist, und
wobei die Fasermaterialschicht (7) mehrere, dem polygonalen Querschnitt entsprechende Eckenabschnitte (5) aufweist, die die Fasermaterialschicht (7) in jeweilige Seitenwandabschnitte (13) unterteilen,
**dadurch gekennzeichnet, dass** das Fluidleitungssystem ferner zumindest im Bereich eines jeweiligen Eckenabschnitts (5) der Fasermaterialschicht (7) wenigstens ein den jeweiligen Eckenabschnitt (5) in seiner polygonalen Querschnittsposition haltendes Längsstabilisierungselement (4) aufweist, das sich in Längsrichtung des Leitungsbauteils (2) erstreckt, wobei ein jeweiliges Längsstabilisierungselement (4) mit der Querschnittsstabilisierungsvorrichtung (3) in Eingriff stehen kann.

2. Fluidleitungssystem nach Anspruch 1, **dadurch gekennzeichnet, dass** das jeweilige Längsstabilisierungselement (4) außenseitig an dem Leitungsbauteil (2) angebracht oder in die Fasermaterialschicht (7) des Leitungsbauteils (2) eingebettet ist.

3. Fluidleitungssystem nach Anspruch 1 oder 2, **dadurch gekennzeichnet, dass** die Querschnittsstabilisierungsvorrichtung (3) mehrere, mit der Anzahl von Seitenwandabschnitten (13) übereinstimmende Querschnittsstabilisierungselemente (25, 25') umfasst, deren jeweilige Längserstreckung (26) im Wesentlichen der Breite (19) eines jeweiligen Seitenwandabschnitts (13) entspricht und die an ihren beiden Längsenden (27, 28) jeweils zumindest ein mit einem entsprechenden Längsstabilisierungselement (4) in Eingriff bringbares Rastmittel (29, 30) aufweisen.

4. Fluidleitungssystem nach Anspruch 3, **dadurch gekennzeichnet, dass** bei einem jeweiligen Querschnittsstabilisierungselement (25, 25') das erste Längsende (27) zumindest einen hakenförmig ausgebildeten Verbindungsansatz (31) und das zweite Längsende (28) zumindest eine Aufnahmeöffnung (33) aufweist, die zur Bildung eines geschlossenen Umfangsprofils der Querschnittsstabilisierungsvorrichtung (3) mit einem Verbindungsansatz (31) eines benachbarten Querschnittsstabilisierungselements (25, 25') in Eingriff steht.

5. Fluidleitungssystem nach einem der Ansprüche 1 bis 4,
**dadurch gekennzeichnet, dass** vor Herstellung einer in sich geschlossenen Mantelfläche das Leitungsbauteil (2) plattenförmig ausgebildet ist und die Innenseite (8) der Fasermaterialschicht (7) mehrere Längsauskehlungen (12) aufweist, wobei die Fasermaterialschicht (7) auf ihrer Außenseite (10) zu den jeweiligen Längsauskehlungen (12) korrespondierend angeordnete und nach außen ballig ausgebildete Längswölbungen (14) aufweist, die Teil der jeweiligen Eckenabschnitte (5) sind.

6. Fluidleitungssystem nach Anspruch 5, **dadurch gekennzeichnet, dass** eine jeweilige Längswölbung (14) in ihrem Scheitel wenigstens eine ein jeweiliges Längsstabilisierungselement (4) aufnehmende Außenlängskehlung (20) aufweist.

7. Fluidleitungssystem nach Anspruch 5 oder 6, **dadurch gekennzeichnet, dass** die Breite (15) einer jeweiligen Längsauskehlung (12) kleiner ist als die Breite (16) einer jeweiligen, nach außen ballig ausgebildeten Längswölbung (14).

8. Fluidleitungssystem nach einem der Ansprüche 5 bis 7,
**dadurch gekennzeichnet, dass** die Längsauskehlungen (12) und die ballig ausgebildeten Längswölbungen (14) jeweils im Querschnitt ellipsenförmig oder kreisbogenförmig ausgebildet sind.

9. Fluidleitungssystem nach Anspruch 8, **dadurch gekennzeichnet, dass** der Radius (17) einer im Querschnitt ellipsenförmig oder kreisbogenförmig ausgebildeten Längswölbung (14) größer ist als der Radius (18) einer im Querschnitt ellipsenförmig oder kreisbogenförmig ausgebildeten Längsauskehlung (12).

10. Fluidleitungssystem nach Anspruch 8 oder 9, **dadurch gekennzeichnet, dass** der Radius (17) einer im Querschnitt ellipsenförmig oder kreisbogenförmig ausgebildeten Längswölbung (14) größer ist als die Breite (19) eines Seitenwandabschnitts (13).

11. Fluidleitungssystem nach einem der Ansprüche 5 bis 10, **dadurch gekennzeichnet, dass** nach Herstellung einer geschlossenen Mantelfläche des Leitungsbauteils (2) die Innenwand (21) einer jeweiligen Längsauskehlung (12) flächig an sich selbst anliegt und ein Teil der fluidundurchlässigen Dichtschicht (9) zwischen der an sich selbst anliegenden Innenwand (21) angeordnet und eingeklemmt ist.

12. Fluidleitungssystem nach einem der vorhergehenden Ansprüche, **dadurch gekennzeichnet, dass** die Fasern der Fasermaterialschicht (7) in den Eckenabschnitten (5) gleich stark oder geringer stark verdichtet sind als in den Seitenwandabschnitten (13).

13. Fluidleitungssystem nach einem der vorhergehenden Ansprüche, **dadurch gekennzeichnet, dass** zumindest Bereiche der Seitenwandabschnitte (13) durch starke Verdichtung der Fasern der Fasermaterialschicht (7) formstabil ausgebildet sind.

14. Fluidleitungssystem nach einem der vorhergehenden Ansprüche, **dadurch gekennzeichnet, dass** eine Schicht (11) aus einem elastischen Vliesmaterial vorgesehen ist, die an der Außenseite (10) des Leitungsbauteils (2) auf der Fasermaterialschicht (7) aufgebracht ist.

15. Fluidleitungssystem nach einem der vorhergehenden Ansprüche, **dadurch gekennzeichnet, dass** zumindest ein Seitenwandabschnitt (13) der Fasermaterialschicht (7) außenseitig querverlaufende, ballig ausgebildete und nach außen gewölbte Biegeabschnitte (23) mit geringer Materialverdichtung aufweist.
